# DEMANDE DE BREVET EUROPEEN

(11) **EP 0 887 950 A1**
(43) Date de publication de la demande: **30.12.1998**
(21) Numéro de dépôt: 98401520.6
(22) Date de dépôt: 22.06.1998
(51) Int. Cl.: H04B 7/08

(54) **Station de base à diversité d'antennes pour l'emission de canaux unidirectionnels, et procédé correspondant**

(30) Priorité: 23.06.1997 FR 9707773
(71) Demandeur: ALCATEL ALSTHOM COMPAGNIE GENERALE D'ELECTRICITE, 75008 Paris (FR)
(72) Inventeur: Chuberre, Nicolas, 31520 Ramonville (FR); Massy, Christian, 92310 Sevres (FR); Lupu, Michèle, 91380 Chilly Mazarin (FR)
(74) Mandataire: El Manouni, Josiane

(57) **Abrégé**

L'invention concerne une station de base (1) d'un système de radiocommunication, du type comprenant au moins deux antennes (A, B) et des moyens (2) de sélection de l'une desdites antennes, lesdits moyens de sélection comprenant :
- des moyens (3) de détermination si un canal à émettre vers au moins une station mobile (5₁ à 5₃) est unidirectionnel, et
- des moyens (4) de commutation de l'une desdites antennes à une autre selon une loi prédéterminée lorsque lesdits moyens de détermination indiquent auxdits moyens de commutation que le canal à émettre est unidirectionnel.

Selon l'invention, ladite loi prédéterminée de commutation est une loi aléatoire ou pseudo-aléatoire.

## Description

Le domaine de l'invention est celui des systèmes de radiocommunication. Par systèmes de radiocommunication, on entend ici aussi bien ceux généralement appelés "sans fil", par exemple au standard DECT (Digital European Cordless Telecommunications) ou CT2 (Cordless Telephone 2nd generation), que ceux généralement appelés "cellulaires", par exemple au standard GSM (Groupe spécial Mobiles) ou DCS 1800 (Digital Communication System). En outre, ces systèmes de radiocommunication peuvent être, dans le cas présent, analogiques comme numériques.

Plus précisément, l'invention concerne une station de base d'un tel système de radiocommunication.

On rappelle que chaque station de base couvre une zone géographique donnée (ou cellule) dans laquelle peuvent se déplacer des stations mobiles, chaque station mobile étant un équipement physique utilisé par un usager du réseau pour accéder aux services de télécommunication offerts.

Selon les systèmes, la station de base est parfois également appelée partie fixe radio (RFP), base ou encore borne. De même, la station mobile est parfois aussi appelée combiné mobile, terminal de radiocommunication ou encore téléphone portatif.

Chaque station de base permet aux stations mobiles qui se trouvent dans sa zone de couverture d'accéder (sans fil) au réseau de radiocommunication. Pour cela, les stations de base et les stations mobiles s'échangent des informations à travers des canaux radio. Ces canaux sont soit des canaux de trafic, s'ils permettent de transmettre la parole ou des données, soit des canaux de contrôle, s'ils permettent de transmettre de la signalisation.

Parmi les canaux (qu'ils soient de trafic ou de contrôle), on fait généralement la distinction entre les canaux bidirectionnels et les canaux unidirectionnels. Un canal bidirectionnel supporte une voie montante (station mobile vers station de base) et une voie descendante (station de base vers station mobile). Par contre, un canal unidirectionnel ne supporte qu'une voie (montante ou descendante).

Dans la présente description, on ne s'intéresse qu'aux canaux unidirectionnels (de trafic ou de contrôle) émis par les stations de base, c'est-à-dire ne comprenant qu'une voie descendante. On notera cependant que par canaux unidirectionnels, on entend ici non seulement les "vrais" canaux unidirectionnels (c'est-à-dire conçus avec uniquement une voie descendante) mais également les "faux" canaux unidirectionnels (c'est-à-dire conçus avec des voies montante et descendante mais présentant temporairement un fonctionnement de type unidirectionnel du fait d'un incident sur la voie montante).

On notera qu'au sein même des canaux unidirectionnels émis par les stations de base, on distingue les canaux diffusés et les canaux simplex. Un canal diffusé est émis par une station de base à destination d'une pluralité de stations mobiles (schéma du type point-multipoint), alors qu'un canal simplex est émis par une station de base à destination d'une unique station mobile (schéma du type point-à-point).

On sait que le signal radio émis par une station de base peut, avant d'être reçu par la ou les stations mobiles, subir des évanouissements rapides pouvant conduire à la corruption partielle ou totale des informations transportées.

Il est connu, notamment dans un système de type DECT, pour pallier aux distorsions dues au milieu de propagation (évanouissements, chemins multiples, ...), de rajouter un dispositif à diversité d'antennes dans la station de base.

Dans le cas d'un canal bidirectionnel, en réception, la station de base choisit de recevoir avec l'une ou l'autre de ses antennes, et en émission, c'est la station mobile qui commande la station de base pour que cette dernière émette sur l'une ou l'autre de ses antennes. En d'autres termes, la station mobile compare la qualité des signaux reçus (non simultanément) des différentes antennes de la station de base, et demande à la station de base d'émettre sur l'antenne dont le signal est reçu avec la meilleure qualité.

Dans le cas d'un canal unidirectionnel émis par la station de base, la station mobile n'a pas cette possibilité de commander la station de base pour que celle-ci change d'antenne émettrice.

Afin de pouvoir néanmoins mettre en oeuvre le mécanisme de diversité d'antennes, il a été proposé dans ce cas de commuter de façon périodique d'une antenne à l'autre. Cette commutation périodique se traduit par une règle d'alternance si la station de base comprend deux antennes, et par une règle circulaire si la station de base comprend plus de deux antennes.

Ainsi, par exemple, si la station de base comprend deux antennes et si le système est du type AMRT (accès multiple à répartition dans le temps), c'est-à-dire avec le canal unidirectionnel constitué par la récurrence d'un intervalle de temps particulier dans chaque trame, alors la commutation périodique consiste à utiliser chaque antenne seulement pour une trame sur deux. En d'autres termes, dans cet exemple, une moitié des trames (et donc une moitié des intervalles de temps affectés au canal unidirectionnel) est transmise par une antenne, et l'autre moitié des trames (et donc l'autre moitié des intervalles de temps affectés au canal unidirectionnel) est transmise par l'autre antenne.

Cette technique connue, de commutation selon un processus périodique, assure à la station mobile de recevoir le canal unidirectionnel pendant la moitié du temps sur une antenne et pendant l'autre moitié du temps sur l'autre antenne. Ainsi, même si le signal provenant d'une antenne subit des évanouissements le rendant inexploitable, il est probable que le signal provenant de l'autre antenne ne subisse quant à lui aucune distorsion. Par conséquent, cette technique connue permet, dans la plupart des cas, d'éviter les évanouissement (ou autres distorsions dues au milieu de propagation) pendant la moitié du temps.

Malheureusement, cette technique connue de commutation selon un processus périodique ne convient pas à toutes les situations, du fait qu'elle suppose que la station mobile écoute en permanence la station de base.

Notamment, elle ne convient pas au cas où la station mobile écoute la station mobile seulement par intermittence, à intervalles de temps réguliers. On s'aperçoit en effet que si la périodicité de l'écoute et la périodicité de la commutation entre les antennes sont multiples l'une de l'autre, la station mobile écoute (ou "voit") toujours la même antenne. Or, si le signal émis par la seule antenne vue par la station mobile subit des distorsions, le bilan de liaison entre la station mobile et la station de base peut être fortement réduit, voire même nul. On comprend que dans ce cas la diversité d'antennes n'est d'aucune utilité.

Une telle situation correspond par exemple au cas où la station mobile est en mode veille ("idle"), et écoute le canal de messagerie (ou canal de paging, qui est un canal de contrôle particulier) sur lequel elle pourrait recevoir un message de recherche de la station de base, lors d'un appel entrant. Cette écoute se fait selon une loi prédéterminée, consistant généralement à écouter seulement certains des intervalles de temps de ce canal de paging, pour des raisons de limitation de la puissance consommée. On comprend que si la station de base utilise alternativement deux antennes pour émettre les intervalles de temps successifs du canal de paging, et si la station mobile écoute seulement un intervalle de temps sur N du canal de paging (avec N pair), alors la station mobile écoute toujours des intervalles de temps émis par la même antenne et l'effet de la diversité d'antennes est annihilé.

L'invention a notamment pour objectif de pallier cet inconvénient de l'état de la technique.

Plus précisément, l'un des objectifs de la présente invention est de fournir une station de base à diversité d'antennes pour l'émission de canaux unidirectionnels, qui permette d'améliorer encore la réception de ces canaux unidirectionnels par les stations mobiles.

L'invention a également pour objectif de fournir une telle station de base mettant en oeuvre une technique de commutation entre les antennes convenant à toutes les situations, et notamment quelle que soit la loi d'écoute des stations mobiles sur le canal de paging.

Ces différents objectifs, ainsi que d'autres qui apparaîtront par la suite, sont atteints selon l'invention à l'aide d'une station de base d'un système de radiocommunication, du type comprenant au moins deux antennes et des moyens de sélection de l'une desdites antennes, lesdits moyens de sélection comprenant :
- des moyens de détermination si un canal à émettre vers au moins une station mobile est unidirectionnel, et
- des moyens de commutation de l'une desdites antennes à une autre selon une loi prédéterminée lorsque lesdits moyens de détermination indiquent auxdits moyens de commutation que le canal à émettre est unidirectionnel,
caractérisée en ce que ladite loi prédéterminée de commutation est une loi aléatoire ou pseudo-aléatoire.

Ainsi, selon l'invention, la loi de commutation entre les antennes est une loi aléatoire ou pseudo-aléatoire, et non pas périodique comme c'est la cas dans l'état de la technique actuel.

De cette façon, une station mobile, quelle que soit sa loi d'écoute, "voit" toutes les antennes, et peut bénéficier effectivement des avantages de la diversité d'antennes. On augmente de 10 dB le bilan de liaison entre la station de base et la station mobile.

De façon avantageuse, le canal unidirectionnel appartient au groupe comprenant :
- les canaux conçus pour être unidirectionnels ;
- les canaux non conçus pour être unidirectionnels mais présentant temporairement un caractère unidirectionnel.

L'invention s'applique aussi bien aux "vrais" canaux unidirectionnels (comprenant une voie descendante uniquement) qu'aux "faux" canaux unidirectionnels (comprenant des voies montante et descendante, mais présentant temporairement un fonctionnement uniquement sur la voie descendante). En d'autres termes, l'invention s'applique à tous les canaux par lesquels la station de base peut joindre la station mobile mais inversement la station mobile ne peut pas joindre la station de base.

Avantageusement, chaque canal conçu pour être unidirectionnel appartient au groupe comprenant :
- les canaux diffusés, émis chacun à destination d'une pluralité de stations mobiles ;
- les canaux simplex, émis chacun à destination d'une unique station mobile.

Préférentiellement, chaque canal diffusé ou simplex, appartient au groupe comprenant :
- les canaux de trafic ;
- les canaux de contrôle ;
- les canaux factices ("dummy bearers") ;
- les canaux de balise ("beacon").

De façon préférentielle, ledit système de radiocommunication appartient au groupe comprenant :
- les systèmes du type DECT (Digital European Cordless Telecommunications) ;
- les systèmes du type CT1 (Cordless Telephone 1st generation) ;
- les systèmes du type CT2 (Cordless Telephone 2nd generation) ;
- les systèmes du type PCN (Personal Communication System) ;
- les systèmes du type GSM (Groupe spécial Mobiles) ;
- les systèmes du type DCS 1800 (Digital Communication System).

L'invention concerne également un procédé d'émission d'un canal unidirectionnel par une station de base d'un système de radiocommunication, ladite station de base comprenant au moins deux antennes, ledit procédé comprenant les étapes suivantes :
- détermination du caractère, unidirectionnel ou non, d'un canal à émettre,
- commutation de l'une desdites antennes à une autre selon une loi prédéterminée lorsque le canal à émettre est unidirectionnel,
caractérisé en ce que ladite loi prédéterminée de commutation est une loi aléatoire ou pseudo-aléatoire.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un schéma synoptique d'un mode de réalisation particulier d'une station de base selon l'invention, émettant un canal unidirectionnel à destination d'une pluralité de stations mobiles ;
- la figure 2 présente un exemple de mode de réalisation d'un canal unidirectionnel, permettant d'expliciter la loi selon l'invention de commutation entre les antennes ; et
- la figure 3 présente un organigramme simplifié du procédé selon l'invention d'émission d'un canal unidirectionnel par une station de base.

L'invention concerne donc une station de base 1, du type à diversité d'antennes, faisant partie d'un système de radiocommunication.

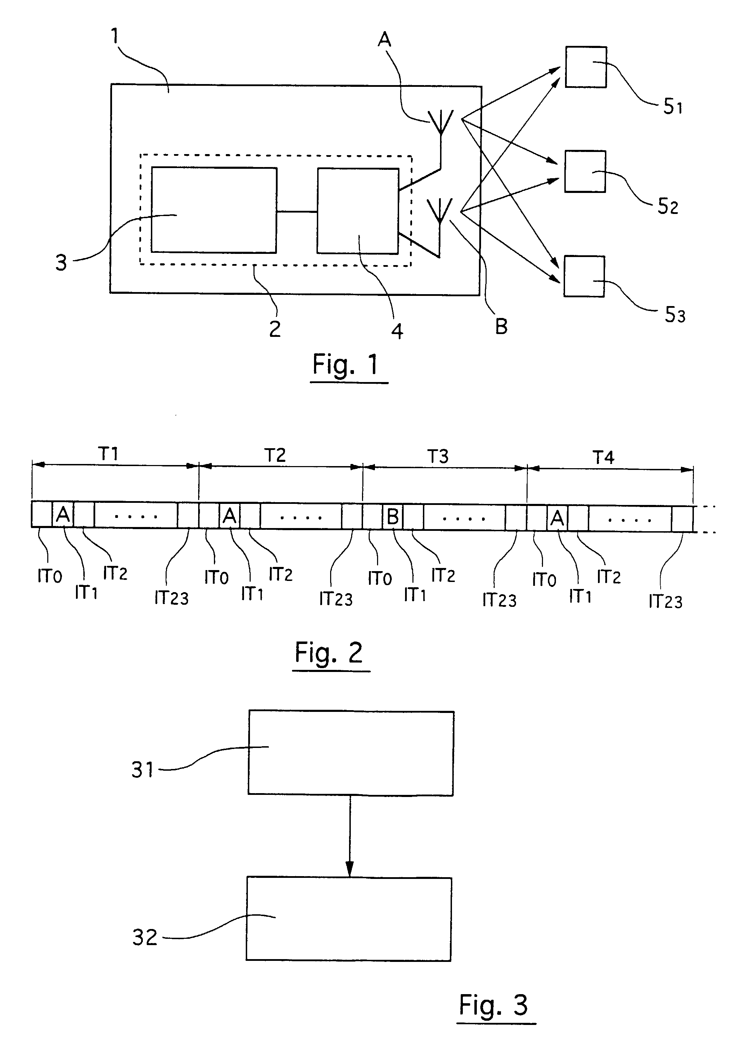

Dans le mode de réalisation présenté sur la figure 1, la station de base 1 comprend deux antennes A, B et des moyens 2 de sélection en émission de l'une de ces deux antennes A, B. Ces moyens 2 de sélection comprennent :
- des moyens 3 de détermination si un canal à émettre vers une ou plusieurs stations mobile 5₁ à 5₃ est unidirectionnel, et
- des moyens 4 de commutation de l'une des deux antennes (par exemple A) à l'autre (par exemple B) selon une loi prédéterminée lorsque les moyens 3 de détermination indiquent aux moyens 4 de commutation que le canal à émettre est unidirectionnel.

Selon la présente invention, la loi prédéterminée de commutation entre les antennes A, B est une loi aléatoire ou pseudo-aléatoire. Dans la pratique, pour des raisons de simplicité et de coût, on met plutôt en oeuvre une loi pseudo-aléatoire, à l'aide d'un générateur pseudo-aléatoire bien connu de l'homme du métier. Il est clair cependant que l'invention concerne également le cas, plus complexe, où la loi est réellement aléatoire.

La présente invention s'applique à tout type de système de radiocommunication dans lequel chaque station de base émet au moins un canal unidirectionnel (ou présentant au moins temporairement un caractère unidirectionnel) à destination d'au moins une station mobile. Ainsi, il peut s'agir d'un système d'un des types suivants (dont la liste n'est en aucune façon exhaustive) : DECT, CT1, CT2, PCN, GSM et DCS 1800.

D'une façon générale, l'invention s'applique à n'importe quel type de canal unidirectionnel, diffusé ou simplex, de contrôle ou de trafic. On notera que par canal de contrôle, on entend ici également les canaux factices ("dummy bearers") ou de balise ("beacon").

A titre explicatif, on présente maintenant, en relation avec la figure 2, un exemple de canal unidirectionnel émis par la station de base de la figure 1, avec la loi selon l'invention de commutation entre les antennes A, B.

Dans cet exemple, on suppose que le canal unidirectionnel émis par la station de base est un canal de paging, diffusé vers la pluralité de stations mobiles 5₁ à 5₃.

On suppose par ailleurs que le système est du type DECT et utilise un mode d'accès mixte AMRT/AMRF. La station de base 1 et les stations mobiles 5₁ à 5₃ émettent et reçoivent alternativement en AMRT sur une porteuse donnée. Chaque trame T1, T2, T3, T4, etc. est constituée de 24 intervalles de temps IT0 à IT23. Les 12 premiers IT0 à IT11 sont par exemple attribués au sens descendant (station de base vers station mobile) et les 12 derniers IT12 à IT23 au sens montant (station mobile vers station de base). Un canal physique est caractérisé par la récurrence d'un intervalle particulier.

Dans cet exemple, on suppose que le canal de paging est constitué par la récurrence du second intervalle de temps IT1 de chaque trame T1, T2, T3, T4, etc.

Selon l'invention, le choix de l'une des antennes A, B pour émettre le second intervalle de temps IT1 de chaque trame est pseudo-aléatoire. Ainsi, sur la figure 2, on a indiqué avec quelle antenne A, B est émis le second intervalle de temps IT1. Avec les 4 premières trames, on a par exemple l'ordre d'émission suivant : A, A, B, A.

Ainsi, même si une station mobile 5₁ à 5₃ n'écoute qu'une trame sur deux, elle ne "voit" pas toujours la même antenne. Dans l'exemple présenté sur la figure 2, si une station mobile 5₁ à 5₃ n'écoute que les trames de rang impair T1, T3, etc., elle "voit" néanmoins les deux antennes A, B de la station de base puisqu'elle reçoit, avec la première trame T1, un second intervalle de temps IT2 émis par l'une des antennes A, et avec la troisième trame T3, un second intervalle de temps IT2 émis par l'autre des antennes B.

On rappelle qu'avec la loi de commutation périodique utilisée dans l'art antérieur, on aurait l'ordre d'émission suivant : A, B, A, B (ou B, A, B, A), c'est-à-dire une alternance parfaite entre les deux antennes A et B. Par conséquent, si une station mobile 5₁ à 5₃ n'écoute que les trames de rang impair T1, T3, etc., elle ne "voit" que l'une des antennes A.

On présente maintenant, en relation avec la figure 3, un organigramme simplifié du procédé selon l'invention d'émission d'un canal unidirectionnel par une station de base.

Ce procédé, qui est mis en oeuvre dans une station de base 1 telle que présentée ci-dessus, comprend les étapes suivantes :
- détermination (31) du caractère, unidirectionnel ou non, d'un canal à émettre,
- commutation (32) de l'une des antennes A, B à une autre selon une loi aléatoire ou pseudo-aléatoire lorsque le canal à émettre est unidirectionnel.

## Revendications

1. Station de base (1) d'un système de radiocommunication, du type comprenant au moins deux antennes (A, B) et des moyens (2) de sélection de l'une desdites antennes, lesdits moyens de sélection comprenant :
- des moyens (3) de détermination si un canal à émettre vers au moins une station mobile (5₁ à 5₃) est unidirectionnel, et
- des moyens (4) de commutation de l'une desdites antennes à une autre selon une loi prédéterminée lorsque lesdits moyens de détermination indiquent auxdits moyens de commutation que le canal à émettre est unidirectionnel,
caractérisée en ce que ladite loi prédéterminée de commutation est une loi aléatoire ou pseudo-aléatoire.

2. Station de base selon la revendication 1, caractérisée en ce que ledit canal unidirectionnel appartient au groupe comprenant :
- les canaux conçus pour être unidirectionnels ;
- les canaux non conçus pour être unidirectionnels mais présentant temporairement un caractère unidirectionnel.

3. Station de base selon la revendication 2, caractérisée en ce que chaque canal conçu pour être unidirectionnel appartient au groupe comprenant :
- les canaux diffusés, émis chacun à destination d'une pluralité de stations mobiles ;
- les canaux simplex, émis chacun à destination d'une unique station mobile.

4. Station de base selon la revendication 2, caractérisée en ce que chaque canal diffusé ou simplex, appartient au groupe comprenant :
- les canaux de trafic ;
- les canaux de contrôle ;
- les canaux factices ("dummy bearers") ;
- les canaux de balise ("beacon").

5. Station de base selon l'une quelconque des revendications 1 à 4, caractérisée en ce que ledit système de radiocommunication appartient au groupe comprenant :
- les systèmes du type DECT (Digital European Cordless Telecommunications) ;
- les systèmes du type CT1 (Cordless Telephone 1st generation) ;
- les systèmes du type CT2 (Cordless Telephone 2nd generation) ;
- les systèmes du type PCN (Personal Communication System) ;
- les systèmes du type GSM (Groupe spécial Mobiles) ;
- les systèmes du type DCS 1800 (Digital Communication System).

6. Procédé d'émission d'un canal unidirectionnel par une station de base (1) d'un système de radiocommunication, ladite station de base comprenant au moins deux antennes (A, B), ledit procédé comprenant les étapes suivantes :
- détermination (31) du caractère, unidirectionnel ou non, d'un canal à émettre,
- commutation (32) de l'une desdites antennes à une autre selon une loi prédéterminée lorsque le canal à émettre est unidirectionnel,
caractérisé en ce que ladite loi prédéterminée de commutation est une loi aléatoire ou pseudo-aléatoire.
